# DEMANDE DE BREVET EUROPEEN

(11) **EP 4 454 969 A1**
(43) Date de publication de la demande: **30.10.2024**
(21) Numéro de dépôt: 23315132.3
(22) Date de dépôt: 28.04.2023
(51) Int. Cl.: B61G 5/10, G02B 6/36

(54) **SYSTÈME DE CONNEXION OPTIQUE À UNE EXTRÉMITÉ D'UNE VOITURE D'UN VÉHICULE, VÉHICULE FERROVIAIRE ET PROCÉDÉ DE MONTAGE ASSOCIÉS**

(71) Demandeur: SpeedInnov, 75008 Paris (FR)
(72) Inventeur: Latour, Alexandre, 17000 LA ROCHELLE (FR); Hellegouarch, Thierry, 17230 ANDILLY (FR)
(74) Mandataire: Lavoix

(57) **Abrégé**

Système de connexion optique (10) à une extrémité (14) d'une voiture (12) d'un véhicule ferroviaire, le système de connexion (10) comprenant une embase (16) définissant un premier orifice (34), un capot (18) définissant un deuxième orifice (36) et étant propre à être fixé sur l'embase (16) en formant un logement (38) délimité par l'embase (16) et une surface intérieure du capot (18) ; un premier câble de raccordement (20) comprenant au moins une fibre optique propre à être reliée à un réseau de communication (15) de ladite voiture (12); et un câble de liaison (23) comprenant un deuxième câble de raccordement (22) comprenant au moins une fibre optique propre à être reliée à un réseau de communication (15) extérieur à ladite voiture (12), le deuxième câble de raccordement étant inséré dans le deuxième orifice (36) pour être raccordé avec le premier câble de raccordement (20).

## Description

La présente invention concerne un système de connexion optique à une extrémité d'une voiture d'un véhicule.

L'invention concerne également un véhicule comprenant au moins deux tels systèmes de connexion optiques.

L'invention concerne également un procédé de montage d'un tel système de connexion optique sur une voiture de véhicule.

L'invention concerne en particulier un véhicule ferroviaire et la création d'un réseau de communication optique global dans ce véhicule ferroviaire.

Il est connu de créer un réseau de communication optique, notamment via le protocole Ethernet, dans un véhicule ferroviaire afin de fournir par exemple un accès internet aux passagers du véhicule.

Chaque véhicule comprend un réseau de communication optique et il est alors nécessaire de les interconnecter entre eux.

A cet effet, il est connu d'utiliser un système de connexion optique entre deux voitures permettant de connecter les deux réseaux de communication respectifs. En particulier, chaque véhicule comprend alors une prise femelle disposée à l'extrémité du véhicule et le système de connexion comprend un câble avec deux prises mâles venant se brancher directement sur les deux prises femelles respectives.

Un tel système est par exemple décrit dans le document US 6,264,048 B1.

Toutefois, ce système ne donne pas entière satisfaction. En particulier, la tenue mécanique du système et la robustesse des connexions optiques ne sont pas satisfaisantes.

En effet, une mauvaise fixation entre les deux prises entraine un potentiel désalignement, voire une détérioration des contacts optiques entre les deux prises et ainsi une mauvaise connexion entre les réseaux de communication.

De plus, la zone entre les deux voitures subit de nombreuses contraintes mécaniques du fait du mouvement relatif des voitures lors de la circulation du véhicule sur les rails. En outre, cette zone subit de nombreuses intempéries telles que du vent, de la pluie ou de la neige.

II s'en suit des défaillances du système de connexion optique et un besoin de maintenance régulier qui pénalisent la bonne exploitation du véhicule ferroviaire.

Le but de l'invention est donc de proposer un système de connexion optique plus robuste et plus fiable tout en étant facile à monter et à remplacer.

A cet effet, l'invention a pour objet un système de connexion optique à une extrémité d'une voiture d'un véhicule ferroviaire, le système de connexion comprenant une embase définissant un premier orifice et étant propre à être fixée de manière permanente à ladite extrémité de ladite voiture, un capot définissant un deuxième orifice et étant propre à être fixé sur l'embase de manière amovible en formant un logement délimité par l'embase et une surface intérieure du capot, un premier câble de raccordement comprenant au moins une fibre optique propre à être reliée à un réseau de communication de ladite voiture, le premier câble de raccordement étant propre à être inséré dans le premier orifice, et un câble de liaison comprenant un deuxième câble de raccordement comprenant au moins une fibre optique propre à être reliée à un réseau de communication extérieur à ladite voiture, le deuxième câble de raccordement étant inséré dans le deuxième orifice pour être raccordé avec le premier câble de raccordement dans ledit logement lorsque le capot est fixé sur l'embase.

Suivant d'autres aspects avantageux de l'invention, le système de connexion comprend une ou plusieurs des caractéristiques suivantes, prises isolément ou suivant toutes les combinaisons techniquement possibles :
- Le premier câble de raccordement est propre à être inséré dans le premier orifice avec un jeu autorisant au moins un degré de liberté du premier câble de raccordement dans le premier orifice.
- Le système de connexion définit un accès au logement pour connecter le premier câble de raccordement au deuxième câble de raccordement correspondant, l'accès étant formé par le premier orifice de l'embase ou par une ouverture dans le capot.
- Le premier câble de raccordement comprend un premier connecteur mécanique et le deuxième câble de raccordement comprend un deuxième connecteur mécanique propre à coopérer avec le premier connecteur mécanique afin de passer d'une configuration séparée à une configuration de verrouillage du premier câble de raccordement avec le deuxième câble de raccordement, et inversement.
- Chacun du premier câble de raccordement et du deuxième câble de raccordement comprend en outre un bouchon de protection propre à coopérer avec respectivement le premier connecteur mécanique et le deuxième connecteur mécanique associé dans la configuration séparée des premier et deuxième câbles de raccordement.
- Chacun du premier câble de raccordement et du deuxième câble de raccordement comprend une gaine de protection extérieure entourant la ou chaque fibre optique, la gaine de protection étant notamment réalisée en matière plastique.
- Le câble de liaison comprend deux deuxièmes câbles de raccordement insérés dans le deuxième orifice, le système comprenant : deux premiers câbles de raccordement propres à être insérés dans le premier orifice, chaque deuxième câble de raccordement étant propre à être raccordé avec l'un des premiers câbles de raccordement dans le logement et une enveloppe, s'étendant depuis le capot et entourant le câble de liaison.
- Le système de connexion comprend en outre une plaque de maintien disposée dans le capot et propre à fixer le câble de liaison par rapport au capot.

L'invention a également pour objet un véhicule ferroviaire comprenant au moins deux voitures comportant chacune un réseau de communication, le véhicule ferroviaire comprenant en outre au moins deux systèmes de connexion optique tels que définis ci-dessus, les deux systèmes de connexion comprenant un câble de liaison commun comprenant un deuxième câble de raccordement relié à chacune de ses extrémités à un premier câble de raccordement respectif à chacun des systèmes de connexion, les systèmes de connexion reliant les deux réseaux de communication.

L'invention a également pour objet un procédé de montage d'un système de connexion optique tel que défini ci-dessus sur une voiture d'un véhicule ferroviaire, comprenant au moins les étapes suivantes :
- fixation de manière amovible du capot sur l'embase fixée sur ladite voiture afin de former le logement et d'assurer une liaison mécanique entre la voiture et un système extérieur, puis
- connexion du premier câble de raccordement au deuxième câble de raccordement dans le logement afin d'assurer une liaison optique entre le réseau de communication de la voiture et le réseau extérieur.

Ces caractéristiques et avantages de l'invention apparaitront plus clairement à la lecture de la description qui va suivre, donnée uniquement à titre d'exemple non limitatif, et faite en référence aux dessins annexés, sur lesquels :
- la figure 1, est une vue schématique de dessus et en coupe partielle, d'un système de connexion selon l'invention dans une configuration déconnectée, et
- la figure 2 est une vue schématique de dessus et en coupe partielle, du système de connexion de la figure 1 dans une configuration connectée.

Dans la description, les termes « horizontal », « vertical », « haut », « bas », « supérieur » et « inférieur » sont définis par rapport à une direction d'élévation d'un véhicule lorsqu'il est disposé sur des rails ou sur une route.

La direction longitudinale A-A' est définie par la direction de circulation du véhicule et la direction transversale est la direction sensiblement perpendiculaire à la direction longitudinale et à la direction d'élévation du véhicule.

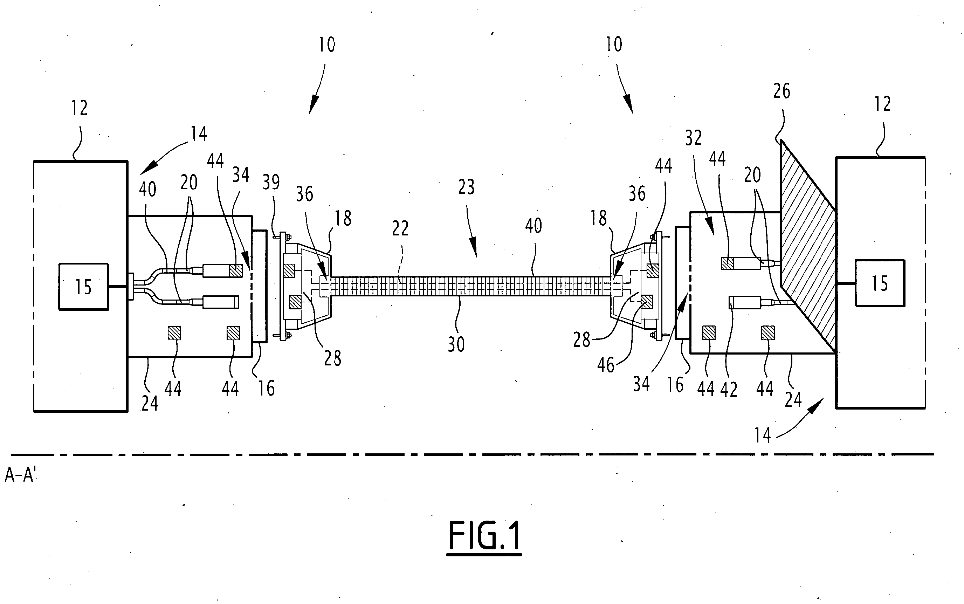

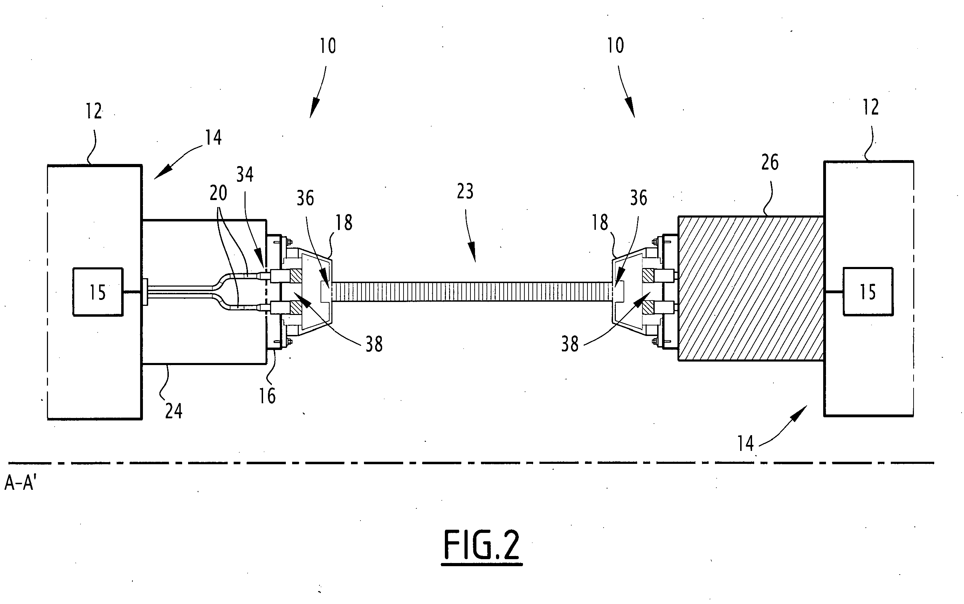

Deux systèmes de connexion 10 selon l'invention sont représentés sur les figures 1 et 2.

Chaque système de connexion 10 est associé à une voiture 12 d'un véhicule.

Le véhicule est un véhicule ferroviaire ou un véhicule de transport sur route, par exemple un autobus.

Chaque voiture 12 s'étend suivant la direction longitudinale A-A' et possède deux extrémités 14 longitudinales.

Avantageusement, le véhicule comprend une pluralité de voitures 12 disposées à la file les unes derrière les autres. Deux voitures adjacentes sont alors liées entre elles par leurs extrémités 14 longitudinales adjacentes.

Chaque voiture 12 comporte un réseau de communication 15, notamment un réseau de communication 15 via le protocole Ethernet, afin de fournir par exemple un accès internet aux passagers de la voiture 12.

Chaque système de connexion 10 est propre à passer d'une configuration déconnectée, représentée sur la figure 1, à une configuration connectée, représentée sur la figure 2.

Dans la configuration connectée, les deux systèmes de connexion 10 relient les deux réseaux de communication 15 des deux voitures 12 adjacentes.

Dans la configuration déconnectée, les deux réseaux de communication 15 sont séparés, par exemple lors d'une maintenance.

Comme visible sur la figure 1, chaque système de connexion 10 comprend une embase 16, un capot 18, au moins un premier câble de raccordement 20 et un câble de liaison 23 comprenant au moins un deuxième câble de raccordement 22, représenté en pointillé sur la figure 1.

Avantageusement, chaque système de connexion 10 comprend en outre un boitier 24, une trappe d'accès 26, une plaque de maintien 28 et une enveloppe 30.

Le boitier 24 est fixé à l'extrémité 14 de la voiture 12 associée.

Le boitier 24 est notamment formé de tôles soudées à la voiture 12.

Le boitier 24 définit une ouverture 32 orientée vers l'extérieur de la voiture 12. L'ouverture 32 est ainsi accessible à un opérateur depuis l'espace entre les deux voitures 12 adjacentes.

L'ouverture 32 est propre à être refermée par la trappe d'accès 26.

Le boitier 24 est propre à passer d'une configuration ouverte, représentée sur la figure 1, dans laquelle la trappe d'accès 26 est à l'écart de l'ouverture 32, à une configuration fermée, représentée sur la figure 2, dans laquelle la trappe d'accès 26 recouvre l'ouverture 32.

L'embase 16 est propre à être fixée de manière permanente à l'extrémité 14 de la voiture 12, en particulier au boitier 24.

L'embase 16 définit un premier orifice 34.

Le boitier 24 définit alors également une ouverture en vis-à-vis du premier orifice 34.

En particulier, l'embase 16 présente la forme d'un cadre rectangulaire définissant le premier orifice 34 et un premier volume intérieur.

L'embase 16 est orientée vers ie bas, selon une direction faisant un angle compris entre 0° et 90°, notamment entre 10° et 45°.

Le capot 18 présente avantageusement une forme trapézoïdale.

Le capot 18 définit un deuxième orifice 36, notamment au niveau de la plus petite base du trapèze, représenté en pointillé sur les figures 1 et 2.

Le deuxième orifice 36 est en particulier circulaire.

Le capot 18 définit également un orifice au niveau de la plus grande base du trapèze. Le capot 18 définit donc un deuxième volume intérieur traversant.

Comme visible sur la figure 2, le capot 18 est propre à être fixé sur l'embase 16 de manière amovible en formant un logement 38 délimité par l'embase 16 et une surface intérieure du capot 18.

En particulier, le capot 18 est propre à être fixé sur l'embase 16 par des moyens de fixation amovibles 39, notamment des vis.

Ainsi, dans la configuration connectée, le logement 38 est constitué du premier volume intérieur défini par l'embase 16 et du deuxième volume intérieur défini par le capot 18.

La trappe d'accès 26 permet alors un accès au logement 38 via le premier orifice 34.

Chaque système de connexion 10 comprend avantageusement deux premiers câbles de raccordement 20. Le câble de liaison 23 comprend avantageusement deux deuxièmes câbles de raccordement 22.

Chaque premier câble de raccordement 20 comprend au moins une fibre optique propre à être reliée au réseau de communication 15 de la voiture 12 associée.

Avantageusement, chaque premier câble de raccordement 20 comprend deux fibres optiques en parallèle.

Chaque premier câble de raccordement 20 est propre à être inséré dans le premier orifice 34.

En particulier, le premier câble de raccordement 20 est propre à être inséré dans le premier orifice 34 avec un jeu autorisant au moins un degré de liberté du premier câble de raccordement 20 dans le premier orifice 34.

Ainsi, le premier câble de raccordement 20 est propre à se déplacer dans le premier orifice 34 selon l'axe défini par les câbles de raccordement 20, 22 au niveau de leur connexion et/ou transversalement par rapport audit axe et/ou en rotation par rapport audit axe.

Chaque premier câble de raccordement 20 traverse l'extrémité 14 du véhicule 12 jusqu'à au moins le boitier 24.

Chaque premier câble de raccordement 20 comprend en outre une gaine de protection 40, un premier connecteur mécanique 42 et un bouchon de protection 44.

La gaine de protection 40 entoure la ou les fibres optiques en formant ainsi une première barrière de protection des fibres optiques.

Le premier connecteur mécanique 42 est disposé à l'extrémité du premier câble raccordement 20, à l'opposé de la voiture 12 associée.

Le bouchon de protection 44 est propre à coopérer avec le premier connecteur 42 afin de le protéger lors d'une éventuelle maintenance. Comme visible sur la figure 2, le câble de liaison 23 est commun aux deux systèmes de connexion 10.

Le ou les deuxièmes câbles de raccordement 22 sont communs aux deux systèmes de connexion 10.

Dans la configuration connectée illustrée sur la figure 2, chaque deuxième câble de raccordement 22 est relié à chacune de ses extrémités à un premier câble de raccordement 20 respectif.

Chaque deuxième câble de raccordement 22 comprend une fibre optique propre à être reliée aux réseaux de communication 15 des deux voitures 12.

Avantageusement, dans le mode de réalisation dans lequel chaque premier câble de raccordement 20 comprend deux fibres optiques en parallèle, chaque deuxième câble de raccordement 22 comprend deux fibres optiques en parallèle.

Chaque deuxième câble de raccordement 22 est inséré dans le deuxième orifice 36, en particulier de manière permanente.

En particulier, comme visible sur la figure 2, chaque deuxième câble de raccordement 22 est propre à être raccordé avec un des premiers câbles de raccordement 20 dans le logement 38 lorsque le capot 18 est fixé sur l'embase 16.

La connexion entre deux câbles de raccordement 20, 22 est réalisée à partir d'un accès au logement 36.

En particulier, l'accès au logement est formé par le premier orifice 34, via la trappe d'accès 26.

En variante, l'accès est formé par une ouverture dans le capot 18, non représentée.

Dans la configuration connectée du système de connexion 10, la connexion mécanique entre le capot 18 et l'embase 16 est donc différente et séparée de la connexion optique entre deux câbles de raccordement 20, 22. Ainsi, les contraintes mécaniques appliquées au niveau de la connexion mécanique ne s'appliquent pas à la connexion optique.

En outre, le capot 18 forme une deuxième barrière de protection mécanique pour la fibre optique et pour la connexion entre les câbles de raccordement 20, 22. Le capot 18 forme notamment une barrière par exemple contre les intempéries.

Chaque deuxième câble de raccordement 22 comprend de préférence une gaine de protection 40.

La gaine de protection 40 entoure la ou les fibres optiques du deuxième câble de raccordement 22 correspondant. La gaine de protection 40 forme ainsi une première barrière de protection de la ou des fibres optiques du deuxième câble de raccordement 22 correspondant.

La gaine de protection 40 est notamment réalisée en matière plastique.

Chaque deuxième câble de raccordement 22 comprend en outre deux deuxièmes connecteurs mécaniques 46 et deux bouchons de protection 44.

Chaque deuxième connecteur mécanique 46 est disposé à une extrémité respective du deuxième câble raccordement 22.

Chaque premier connecteur 42 est propre à coopérer avec le deuxième connecteur 46 associé afin de passer d'une configuration séparée, visible sur la figure 1, à une configuration de verrouillage du premier câble de raccordement 20 avec le deuxième câble de raccordement 22, visible sur la figure 2.

Inversement, les deux connecteurs mécaniques 42, 46 sont propres à passer de la configuration de verrouillage à la configuration séparée, par exemple en cas de maintenance.

Chaque bouchon de protection 44 est propre à coopérer avec le deuxième connecteur 46 afin de le protéger lors d'une éventuelle maintenance.

Dans la configuration séparée, chaque bouchon de protection 44 est propre à être connecté au connecteur mécanique 42, 46 associé, comme cela est visible sur les connecteurs mécaniques 42, 46 en haut de la figure 1.

Dans la configuration de verrouillage, chaque bouchon de protection 44 est disposé à l'écart du connecteur 42, 46, comme visible sur les connecteurs mécaniques 42, 46 en bas de la figure 1.

La plaque de maintien 28 est disposée dans le capot 18, en particulier dans le deuxième volume intérieur du capot 18.

La plaque de maintien 28 est par exemple fixée sur la surface intérieure du capot 18.

La plaque de maintien 28 est propre à fixer le câble de liaison 23 par rapport au capot 18.

En particulier, la plaque de maintien 28 définit au moins une ouverture dans laquelle le câble de liaison 23 est inséré de manière permanente.

L'enveloppe 30 s'étend entre les deux capots 18 et entoure le câble de liaison 23.

L'enveloppe 30 est notamment réalisée en matière plastique.

Un procédé de montage d'un système de connexion optique 10 selon l'invention va maintenant être décrit.

Initialement, le système de connexion 10 est dans la configuration déconnectée, comme représenté sur la figure 1.

Chaque bouchon de protection 44 est connecté au connecteur mécanique 42, 46 associé.

Le capot 18 est disposé en regard de l'embase 16 puis le capot 18 est fixé à l'embase 16 au moyen des moyens de fixation amovibles 39 afin de réaliser une liaison mécanique entre la voiture 12 et un système extérieur, notamment la voiture 12 adjacente.

Le logement 38 est alors formé du premier volume intérieur défini par l'embase 16 et du deuxième volume intérieur défini par le capot 18.

Puis, la trappe d'accès 26 est ouverte afin de donner un accès au logement 38, via le boitier 24 et le premier orifice 34.

Chaque bouchon de protection 44 est dissocié du connecteur mécanique 42, 46 associé.

Puis, le premier câble de raccordement 20 est fixé au deuxième câble de raccordement 22 correspondant dans le logement 38 afin de réaliser une liaison optique entre le réseau de communication 15 de la voiture 12 associé et un réseau de communication extérieur, en particulier, le réseau de communication de la voiture 12 adjacente.

Puis, la trappe d'accès 26 est refermée afin d'assurer par exemple l'étanchéité du logement 38.

Le système de connexion 10 est alors dans la configuration connectée, comme représenté sur la figure 2.

Un procédé de maintenance du système de connexion optique 10 selon l'invention va maintenant être décrit.

Le système de connexion 10 est initialement dans la configuration connectée, comme représentée sur la figure 2.

Une opération de maintenance sur le deuxième câble de raccordement 22 est alors programmée.

Le capot 18 est détaché de l'embase 16, notamment en ôtant les moyens de fixation amovibles 39.

L'opérateur tire vers lui les deux câbles de raccordement 20, 22 et les détache l'un de l'autre en faisant passer les connecteurs mécaniques 42, 46 de la configuration de verrouillage à la configuration séparée.

L'opérateur remplace le câble de liaison 23 par un nouveau câble de liaison 23.

Chaque câble de raccordement 22 du nouveau câble de liaison 23 est connecté au premier câble de raccordement 20 correspondant puis le capot 18 est fixé à l'embase 16.

Ainsi, le procédé de maintenance est réalisé sans avoir besoin d'ouvrir la trappe d'accès 26.

On conçoit alors que l'invention présente un certain nombre d'avantages.

En effet, le système de connexion 10 selon l'invention permet une connexion optique séparée de la connexion mécanique.

Ainsi, les endommagements de la connexion optique dus à un mauvais positionnement ou à un mauvais alignement entre les connecteurs optiques sont éliminés et les contraintes appliquées à la connexion mécanique ne se répercutent pas sur la connexion optique.

De plus, l'invention permet une double protection des fibres optiques grâce à la gaine de protection 40 et au logement 38 formé par l'embase 16 et le capot 18.

En outre, le montage et la maintenance du système de connexion 10 selon l'invention sont facilement et rapidement mis en oeuvre.

Le système de connexion 10 selon l'invention permet donc une connexion plus robuste et plus fiable tout en étant facile à monter et à remplacer.

## Revendications

1. Système de connexion optique (10) à une extrémité (14) d'une voiture (12) d'un véhicule ferroviaire, le système de connexion (10) comprenant :
- une embase (16) définissant un premier orifice (34) et étant propre à être fixée de manière permanente à ladite extrémité (14) de ladite voiture (12) ;
- un capot (18) définissant un deuxième orifice (36) et étant propre à être fixé sur l'embase (16) de manière amovible en formant un logement (38) délimité par l'embase (16) et une surface intérieure du capot (18) ;
- un premier câble de raccordement (20) comprenant au moins une fibre optique propre à être reliée à un réseau de communication (15) de ladite voiture (12), le premier câble de raccordement (20) étant propre à être inséré dans le premier orifice (34) ; et
- un câble de liaison (23) comprenant un deuxième câble de raccordement (22) comprenant au moins une fibre optique propre à être reliée à un réseau de communication (15) extérieur à ladite voiture (12), le deuxième câble de raccordement (22) étant inséré dans le deuxième orifice (36) pour être raccordé avec le premier câble de raccordement (20) dans ledit logement (38) lorsque le capot (18) est fixé sur l'embase (16).

2. Système de connexion (10) selon la revendication 1, dans lequel le premier câble de raccordement (20) est propre à être inséré dans le premier orifice (34) avec un jeu autorisant au moins un degré de liberté du premier câble de raccordement (20) dans le premier orifice (34).

3. Système de connexion (10) selon la revendication 1 ou 2, définissant un accès au logement (38) pour connecter le premier câble de raccordement (20) au deuxième câble de raccordement (22) correspondant, l'accès étant formé par le premier orifice (34) de l'embase (16) ou par une ouverture dans le capot (18).

4. Système de connexion (10) selon l'une quelconque des revendications précédentes, dans lequel le premier câble de raccordement (20) comprend un premier connecteur mécanique (42) et le deuxième câble de raccordement (22) comprend un deuxième connecteur mécanique (46) propre à coopérer avec le premier connecteur mécanique (42) afin de passer d'une configuration séparée à une configuration de verrouillage du premier câble de raccordement (20) avec le deuxième câble de raccordement (22), et inversement.

5. Système de connexion (10) selon la revendication 4, dans lequel chacun du premier câble de raccordement (20) et du deuxième câble de raccordement (22) comprend en outre un bouchon de protection (44) propre à coopérer avec respectivement le premier connecteur mécanique (42) et le deuxième connecteur mécanique (46) associé dans la configuration séparée des premier et deuxième câbles de raccordement (20, 22).

6. Système de connexion (10) selon l'une quelconque des revendications précédentes, dans lequel chacun du premier câble de raccordement (20) et du deuxième câble de raccordement (22) comprend une gaine de protection (40) extérieure entourant la ou chaque fibre optique, la gaine de protection (40) étant notamment réalisée en matière plastique.

7. Système de connexion (10) selon l'une quelconque des revendications précédentes, dans lequel le câble de liaison (23) comprend deux deuxièmes câbles de raccordement (22) insérés dans le deuxième orifice (36), le système (10) comprenant :
- deux premiers câbles de raccordement (20) propres à être insérés dans le premier orifice (34), chaque deuxième câble de raccordement (22) étant propre à être raccordé avec l'un des premiers câbles de raccordement (20) dans le logement (38) ; et
- une enveloppe (30), s'étendant depuis le capot (18) et entourant le câble de liaison (23).

8. Système de connexion (10) selon l'une quelconque des revendications précédentes, comprenant en outre une plaque de maintien (28) disposée dans le capot (18) et propre à fixer le câble de liaison (23) par rapport au capot (18).

9. Véhicule ferroviaire comprenant au moins deux voitures (12) comportant chacune un réseau de communication (15), le véhicule ferroviaire comprenant en outre au moins deux systèmes de connexion optique (10) selon l'une quelconque des revendications précédentes, les deux systèmes de connexion (10) comprenant un câble de liaison (23) commun comprenant un deuxième câble de raccordement (22) relié à chacune de ses extrémités à un premier câble de raccordement (20) respectif à chacun des systèmes de connexion (10), les systèmes de connexion (10) reliant les deux réseaux de communication (15).

10. Procédé de montage d'un système de connexion optique (10) selon l'une quelconque des revendications 1 à 8 sur une voiture (12) d'un véhicule ferroviaire, comprenant au moins les étapes suivantes : ,
- fixation de manière amovible du capot (18) sur l'embase (16) fixée sur ladite voiture (12) afin de former le logement (38) et d'assurer une liaison mécanique entre la voiture (12) et un système extérieur, puis
- connexion du premier câble de raccordement (20) au deuxième câble de raccordement (22) dans le logement (38) afin d'assurer une liaison optique, entre le réseau de communication (15) de la voiture (12) et le réseau extérieur.
